# EUROPEAN PATENT APPLICATION

(11) **EP 1 962 109 A2**
(43) Date of publication of application: **27.08.2008**
(21) Application number: 08002552.1
(22) Date of filing: 12.02.2008
(51) Int. Cl.: G02B 1/11, C23C 14/00

(54) **Glass sheet with antireflection film and laminated glass for windows**

(30) Priority: 21.02.2007 JP 2007040928
(71) Applicant: Asahi Glass Company, Limited, Chiyoda-ku Tokyo 100-8405 (JP)
(72) Inventor: Miyagi, Takahira, Tokyo 100-8405 (JP); Katayama, Yoshihito, Tokyo 100-8405 (JP); Kimura, Yukio, Tokyo 100-8405 (JP)
(74) Representative: Müller-Boré & Partner Patentanwälte

(57) **Abstract**

A glass substrate with antireflection film is provided, which has sufficient antireflection performance for obliquely incident light, high visible light transmittance, sufficient abrasion resistance and good transmittance for electromagnetic waves, which is sufficiently durable against heat treatment in the production process, to which treatment after film-forming is applicable, and which has smaller number of films and thus is producible at low cost.

A glass sheet with antireflection film, comprising a glass sheet and an antireflection film composed of at least two layers and provided on a surface of the glass sheet, wherein the antireflection film comprises a film (a) made of a high refractive index material having a refractive index of from 1.8 to 2.6 and an extinction coefficient of from 0.01 to 0.65 in a wavelength region of from 380 to 780 nm, and a film (b) made of a low refractive index material having a refractive index of at most 1.56 in a wavelength region of from 380 to 780 nm, and wherein the film (b) is positioned at an outermost surface of the antireflection film and the antireflection film has a sheet resistance of at least 1 kΩ/□.

## Description

The present invention relates to a glass sheet with antireflection film and a laminated glass for windows.

There are cases where antireflection function is required for glass substrates. For example, a glass substrate to be used as a windshield glass (front glass) for automobiles is required to have an antireflection function for obliquely incident visible light in order to reduce projection of light from e.g. a dashboard to improve visibility for a driver.

For example, Patent Document 1 describes, as a glass with antireflection film satisfying such a function, a glass with antireflection film for windows of transportation vehicles, wherein the film comprises a light-absorbing film consisting essentially of a nitride and having a predetermined thickness, and an oxide film having predetermined refractive index and thickness, formed in this order on a substrate. Such an antireflection film has sufficiently low reflectivity and high visible light transmittance for obliquely incident light, which has sufficient abrasion resistance, which has a thin film thickness, which is producible at low cost, and which is sufficiently durable against heat treatment (for example, a heat treatment for bending process) in the production process.

In recent years, besides the above-mentioned performances, there is a case where transmittance for electromagnetic waves is required. For example, a window glass to be employed as a windshield glass (front glass) for recent automobiles, is required to have transmittance for electromagnetic waves, considering to provide an antenna on the substrate.

However, since such a glass with antireflection film for windows of transportation vehicles described in Patent Document 1, has low resistivity and shields electromagnetic waves, its transmittance for electromagnetic waves is insufficient.

To cope with this problem, Patent Document 2 proposes as a substrate with an antireflection film having a high visible light transmittance, a low reflectivity and a high film resistivity (namely, good transmittance for electromagnetic waves) and having no cracking even when subjected to heat treatment, a substrate with an antireflection film comprising a transparent substrate and an antireflection film having even number layers in total of a coating film made of high-refractive index material and a coating film made of low-refractive index material stacked in this order from the transparent substrate side, wherein at least one coating film made of high-refractive index material is a single layer film (a) of a titanium oxynitride layer, a stacked film (b) containing a titanium oxide layer and a zirconium oxide layer, or a stacked film (c) containing a titanium oxynitride layer and a zirconium oxide layer.
Patent Document 1: W02000/33110
Patent Document 2: WO2006/80502

However, the above-mentioned substrate with antireflection film described in Patent Document 2, has a problem that it has a large number of stacked layers, its production cost becomes high.

To solve these problems, it is an object of the present invention to provide a substrate with antireflection film which has a good performance equivalent to that of the substrate with antireflection film described in Patent Document 2, and which has a smaller number of stacked layers and is excellent in productivity.

Namely, it is an object of the present invention to provide a glass sheet with antireflection film, which has sufficiently low reflectivity for obliquely incident light, high visible light transmittance, sufficient abrasion resistance and good transmittance for electromagnetic waves, which is sufficiently durable against heat treatment in the production process, to which treatment after film-forming is applicable, which can reduce the number of stacked layers (films) to reduce the thickness of entire film, which is excellent in productivity and producible at low cost. Further, it is also an object of the present invention to provide a laminated glass for windows, which employs the above glass sheet with antireflection film, and which has sufficiently low reflectivity, high visible light transmittance, sufficient abrasion resistance and good transmittance for magnetic waves.

The present invention includes the following contents (1) to (12).
(1) A glass sheet with antireflection film, comprising a glass sheet and an antireflection film composed of at least two layers and provided on a surface of the glass sheet, wherein the antireflection film comprises a film (a) made of a high refractive index material having a refractive index of from 1.8 to 2.6 and an extinction coefficient of from 0.01 to 0.65 in a wavelength region of from 380 to 780 nm, and a film (b) made of a low refractive index material having a refractive index of at most 1.56 in a wavelength region of from 380 to 780 nm, and wherein the film (b) is positioned at an outermost surface of the antireflection film and the antireflection film has a sheet resistance of at least 1 kΩ/□.
(2) The glass sheet with antireflection film according to the above (1), wherein the film (a) has a geometric film thickness of from 2 to 80 nm and the film (b) has a geometric film thickness of from 80 to 300 nm.
(3) The glass sheet with antireflection film according to the above (1) or (2), wherein the main component of the high refractive index material is a metal oxide (A) containing at least one selected from the group consisting of Co, Al, Si, Zn, Zr and V.
(4) The glass sheet with antireflection film according to the above (3), wherein the metal oxide (A) is at least one selected from the group consisting of a Co-Al oxide, a Co-Zn-Al oxide, a Co-Al-Si oxide, a Co-Zn-Si oxide, a Co-Si oxide and a Zr-Si-V oxide.
(5) The glass sheet with antireflection film according to the above (3) or (4), wherein the metal oxide (A) contains Co and Al, and the atomic ratio (Al/Co) between Al and Co is from 0.5 to 15.
(6) The glass sheet with antireflection film according to any one of the above (3) to (5) wherein the metal oxide (A) is CoAlₓO_{y} (0.5≦X≦15, 1.75≦Y≦24).
(7) The glass sheet with antireflection film according to any one of the above (1) to (6), wherein the low refractive index material is a silicon oxide.
(8) A laminated glass for windows, comprising a first glass sheet, a second glass sheet provided with an antireflection film composed of at least two layers, and an interlayer provided between the first glass sheet and the second glass sheet, wherein the second glass sheet is positioned in an indoor side, and wherein the second glass sheet provided with the antireflection film, is a glass sheet with the antireflection film as defined in any one of the above (1) to (7), and the outermost surface of the antireflection film is positioned in an indoor side.
(9) A laminated glass for windows according to the above (8), which has a visible light transmittance (Tᵥ) of at least 70% at an incident angle of 0°.
(10) A laminated glass for windows according to the above (8) or (9), which has a visible light reflectivity (Rᵥ) of at most 11% at an incident angle of 60° from a film surface of the antireflection film.
(11) The laminated glass for windows according to any one of the above (8) to (10), wherein the antireflection film has visible light reflectivity (Rᵥ) of at most 8% at an incident angle of 0° from the film surface of the antireflection film.
(12) A method for producing the glass sheet with antireflection film as defined in the above (1) to (7), wherein at least the film (a) is formed by sputtering.

According to the present invention, it is possible to provide a glass sheet with antireflection film, which has sufficiently low reflectivity for obliquely incident light, high visible light transmittance, sufficient abrasion resistance and good transmittance for electromagnetic waves, which is sufficiently durable against a heat treatment in the production process, to which a treatment after film-forming is applicable, which can reduce the number of films and reduce the thickness of entire film, and which is excellent in productivity and producible at low cost.

Now, the present invention will be described in detail.

In the drawings:
Fig. 1 is a graph showing wavelength dispersion of refractive index of CoAlₓO_{y} film of each Example.
Fig. 2 is a graph showing wavelength dispersion of extinction coefficient of CoAlₓO_{y} film of each Example.
Fig. 3 is a graph showing wavelength dispersion of refractive index of SiO₂ film of the Examples.

The present invention provides a glass sheet with antireflection film, comprising a glass sheet and an antireflection film composed of at least two layers and provided on a surface of the glass sheet, wherein the antireflection film comprises a film (a) made of a high-refractive index material having a refractive index of from 1.8 to 2.6 and an extinction coefficient of from 0.01 to 0.65 in a wavelength region of from 380 to 780 nm, and a film (b) made of a low refractive index material having a refractive index of at most 1.56 in a wavelength region of from 380 to 780 nm, and wherein the film (b) is positioned at an outermost surface of the antireflection film and the antireflection film has a sheet resistance of at least 1 kΩ/□. The antireflection film has multi-film structure. Hereinafter such a glass sheet with antireflection film is also referred to as "antireflection glass of the present invention".

The glass sheet in the present invention is not particularly limited so long as it is a sheet made of a glass. For example, a float glass (a glass produced by a float method) or a colored heat-absorbing glass, may be mentioned. These are preferably transparent glass sheets. Further, the glass sheet in the present invention is not particular limited in the thickness, and for example, one having a thickness of about from 1.5 to 3.0 mm may be employed. Such a glass substrate may have a flat shape or curved shape. Since many vehicles, particularly windows for automobiles, are curved, the shape of glass sheet may be a curved shape.

In the antireflection glass of the present invention, the sheet resistance is preferably at least 1 kΩ/□, more preferably at least 5 kΩ/□. If the sheet resistance is at least 1 kΩ/□, sufficient transmittance for electromagnetic waves is obtained, which means there is no problem for signal-receiving performance of e.g. TVs and radios. Accordingly, so long as the material allows, the upper limit of sheet resistance is not particularly limited.

In recent years, according to progress of wide spread use of digital TV broadcasting, it has become required to receive broadcasting waves using high frequencies of UHF band or higher, with high antenna gain. For this purpose, for example, in automobiles, antennas are disposed on front glasses besides rear portions or ceiling portions of automobiles. Further, in order to receive broadcasting waves of UHF band or higher, further high transmittance for electromagnetic waves is required, and accordingly, a front glass is required to have a sheet resistance of at least 10 MΩ/□ (preferably at least 40 MΩ/□). The glass sheet with antireflection film of the present invention usually has a sheet resistance of at least 1 GΩ/□ as shown also in the Examples. Accordingly, not only receiving of normal TV or radio waves, receiving of broadcasting waves of UHF band or higher without problem.

Here in the present invention, a sheet resistance means a sheet resistance measured by a double ring method.

In the antireflection glass of the present invention, a film (a) is made of a high refractive index material having a refractive index of from 1.8 to 2.6 and an extinction coefficient of from 0.01 to 0.65 in a wavelength region of from 380 to 780 nm. In regions of wavelength outside the region of from 380 to 780 nm and close to its boarders, the refractive index or the extinction coefficient of the film (a) is not necessarily within the above-mentioned range, but preferably mostly be within the range.

The refractive index is preferably from 2.0 to 2.4. Here, the refractive index means a value measured by a spectroscopic ellipsometry. In the present invention, a refractive index means a value measured by such a method unless otherwise specified.

Further, the above-mentioned high refractive index material has an extinction coefficient of from 0.01 to 0.65. This extinction coefficient is preferably from 0.05 to 0.5. Here, the extinction coefficient means a value measured by a spectroscopic ellipsometry. In the present invention, an extinction coefficient always means a value measured by such a method unless otherwise specified.

The film (a) made of such a high-refractive index material preferably has a geometric film thickness of from 2 to 80 nm. The preferred film thickness changes depending on the material constituting the film (a) or the layer stack of the antireflection film, but the film thickness if preferably from 5 to 70 nm, more preferably from 10 to 40 nm. As described later, in a case where the antireflection film of the present invention has a plurality of films (a), each of the films (a) preferably has a film thickness in the above-mentioned range.

Here, the geometric film thickness means a value measured by a profilometer. In the present invention, a film thickness of a film means a geometric film thickness. Further, in the present invention, a geometric film thickness always means a value measured by such a method unless otherwise specified.

In the antireflection glass of the present invention, such a film (a) absorbs visible light to thereby slightly reduces visible light transmittance into indoor side, and reduces heat of direct sunlight.

In the antireflection glass of the present invention, the film (b) is made of a low refractive index material having a refractive index of at most 1.56 in a wavelength region of from 380 to 780 nm. The refractive index is preferably at most 1.50, particularly preferably at most 1.48. The film (b) is preferably substantially a transparent film having an extinction ratio of substantially 0.

In the antireflection glass of the present invention, such a film (b) reduces reflectivity by an optical interference with the above film (a).

Further, the film (b) made of such a low refractive index material, preferably has a geometric film thickness of from 80 to 300 nm. The film thickness is more preferably from 100 to 200, particularly preferably from 120 to 160. When the film (b) has such a film thickness, its antireflection performance is improved for obliquely incident light.

The antireflection glass of the present invention has at least films (a) and (b) having the above-mentioned thickness and properties etc., to thereby has a sufficient antireflection performance for obliquely incident light and high visible light transmittance.

In the glass sheet with antireflection film, the reflectivity (Rᵥ) for visible light incident from a film surface of an antireflection film at an incident angle of 60°, is preferably at most 12%, particularly preferably at most 11%. Further, at an incident angle of 0°, the reflectivity is preferably at most 8.5%, particularly preferably at most 6.5%. Here, the value of visible light reflectivity (Rᵥ) is a value including rear surface reflection in both of the cases of 60° incident and 0° incident.

Here, the visible light transmittance (Tᵥ) at 0° incident is preferably at least 77%, particularly preferably at least 82%.

A glass sheet with antireflection film having such reflective performance and visible light transmittance, may be suitably employed as a glass sheet to be used in a car-interior side of a front glass for automobiles. A front glass for automobiles is usually a laminated glass constituted by two glass sheets laminated via an interlayer made of resin interposed between them. When a laminated glass is produced by using the glass sheet with antireflection film of the present invention so that its surface having an antireflection film is positioned in a car-interior side, the reflectivity (Rᵥ) for visible light incident from a film surface of the antireflection film can be at most 11% in a case of 60° incident, and at most 8% in a case of 0° incident. The value of visible light reflectivity (Rᵥ) is a value including rear surface reflection in both of the cases of 60° incident and 0° incident. Further, the visible light transmittance (Tᵥ) in a case of 0° incident can be at least 70%, which means that the glass has sufficient low reflection performance for obliquely incident light and high visible light transmittance.

Here, the values of visible light transmittance (Tᵥ) and visible light reflectivity (Rᵥ) in the present invention, are values calculated according to JIS R3106. Further, the visible light transmittance (Tᵥ) for light incident from a surface having the antireflection film and that for light incident from a surface having no antireflection film, are the same.

Then, materials constituting the film (a) and film (b) are described. The film (a) and the film (b) may be each made of various types of materials so long as the material has the above-mentioned refractive index and extinction coefficient and the sheet resistance of an antireflection film including the film (a) and the film (b) becomes at least 1 kΩ/□.

In the present invention, the main component of the high refractive index material constituting the film (a) is preferably a metal oxide (A) containing at least one selected from the group consisting of Co, Al, Sn, Zn, Zr and V.

As such a metal oxide (A), a Co-Al oxide, a Co-Zn-Al oxide, a Co-Al-Si oxide, a Co-Zn-Si oxide, a Co-Si oxide or a Zr-Si-V oxide may, for example, be mentioned. The metal oxide (A) may be a mixture of a plurality of different types.

Here, for example, "a Co-Al oxide" means "a material composed of cobalt atom(s), aluminum atom(s) and oxygen atom(s)". In the present invention, "a material composed of cobalt atom(s), aluminum atom(s) and oxygen atom(s)" is not limited to a composite oxide, but includes various types of oxides in which various types of combinations are formed between a metal atom and another metal atom or between a metal atom and an oxygen atom, or it may be a mixture of various types of oxides. Further, it may be a mixture of composite oxide and various types of oxides. It is because a metal oxide includes, depending on the types or film-forming methods, one constituted by a single compound (oxide) and one that is a mixture of a plurality of compounds.

In this specification, explanation is made using "a Co-Al oxide" as an example, but the same definition is applied also to other oxides such as a Co-Zr-Al oxide, a Co-Al-Si oxide, a Co-Zn-Si oxide, a Co-Si oxide or a Zr-Si-V oxide.

Specifically, "a Co-Al oxide" includes CoAlₓO_{y} (0.5≦X≦15, 1.75≦Y≦24) and a mixture of CoO_{z} (1≦Z≦1.5) and Al₂O₃. Further, "a Co-Zn-Si oxide" includes (Co,Zn)₂SiO₄. Further, "a Co-Si oxide" includes Co₂SiO₄. Further, "a Zr-Si-V oxide" includes V-doped ZrSiO₄.

The metal oxide (A) is preferably one selected from the group consisting of a Co-Al oxide, a Co-Zn-Al oxide and a Co-Al-Si oxide, more preferably a Co-Al oxide.

Further, the metal oxide (A) is preferably one containing Co and Al and having an atomic ratio (Al/Co) between Al and Co of from 0.5 to 15. This ratio (Al/Cl) is more preferably from 1 to 7, further preferably from 1.4 to 3.

Further, the metal oxide (A) is preferably at least one selected from the group consisting of a Co-Al oxide, a Co-Zn-Al oxide and a Co-Al-Si oxide, and has the above-mentioned Al/Co ratio.

This is because when the metal oxide (A) is of the above-mentioned type and an oxide having the above-mentioned Al/Co ratio, a laminated glass employing the metal oxide (A) shows a transmission color change rate of at most 0.02 and a reflection color change rate of at most 0.05 for visible light of 0° incident.

Here, in the present invention, the transmission color change rate and the reflection color change rate each means the absolute value of the difference (Δx,Δy) between a color tone of a laminated glass obtained by employing the glass sheet with antireflection film of the present invention using the C light source according to JIS-Z8722 as a light source for color measurement and plotted in an x-y coordinate, and a color tone of a laminated glass employing a glass substrate (a glass substrate on which no antireflection film is formed) plotted in an x-y coordinate in the same manner.

The film (a) preferably contains the above-mentioned metal oxide (A) as the main component, wherein "main component" means a component whose content is at least 90 mass%. Namely, based on the total mass of the high-refractive index material constituting the film (a), the content of the metal oxide (A) is preferably at least 90 mass%. The content is preferably at least 95 mass%, more preferably at least 98 mass%, further preferably 100 mass% in which substantially no other component is contained. This is because when the content is high, a high-refractive index material having suitable refractive index and extinction coefficient is easily obtained.

Materials other than the metal oxide (A) constituting high-refractive index material, is not particularly limited. These materials may be any materials so long as the refractive index and the extinction coefficient of entire high-refractive index material constituted by the metal oxide (A) and other materials, are within the above-mentioned predetermined range, and so long as no crack is formed in a film by change of crystal structure or shrinkage of the film even if the film is subjected to a heat treatment at a high temperature of about from 560 to 700°C.

The low refractive index material constituting the film (b) may be various materials so long as the material has a refractive index of at most 1.56. In the present invention, the material is preferably a silicon oxide. Since a silicon oxide has high durability (abrasion resistance) and it can make a haze value to be 5% or less.

Here, in the present invention, a haze value means a value measured by a method according to JIS K7105 and JIS K7136.

Further, the low-refractive index material contains a silicon oxide in an amount of at least 90 mass%, preferably at least 95 mass%, more preferably 100 mass% (containing substantially no other component). This is because such a material has high durability (abrasion resistance), which can reduce a haze value to be at most 5% (preferably at most 3%, more preferably at most 1%), and has a low refractive index. Further, among silicon oxides, SiO₂ is preferred. This is because SiO₂ has a low refractive index (from about 1.45 to 1.48) at a wavelength 550 nm. When the low refractive index material is substantially composed of SiO₂, a haze value can be at most 0.6%, such being preferred.

The antireflection glass of the present invention has an antireflection film formed on the glass sheet and the antireflection film is constituted by at least two layers. The "at least two layers" has at least the film (a) and the film (b), and the film (b) is disposed in the outermost surface of the antireflection film. With respect to the positional relation between the film (a) and the film (b), the film (a) is disposed in a side closer to the glass sheet, and the film (b) is disposed in a side away from the glass sheet (on outermost surface). In the present invention, so long as this positional relation between the film (a) and the film (b) is maintained, an antireflection film of any one of various layer stacks may be employed.

The antireflection film may be an antireflection film of two layers constituted by the film (a) and the film (b) wherein the film (a) is disposed on a surface of a glass sheet and the film (b) is disposed on the film (a), or the antireflection film may be a film having a layer stacks containing another film in addition to the films (a) and (b).

Namely, the glass sheet with antireflection film of the present invention may have another film (hereinafter referred to as a film (c)) in addition to the film (a) and the film (b) so long as the film (c) does not affect transmittance for electromagnetic waves, visible light transmittance (Tᵥ) and visible light reflectivity (Rᵥ).

A material constituting the film (c) may, for example, be titanium oxide, zirconium oxide, titanium oxynitride, niobium oxide, tin oxide, silicon nitride, zirconium nitride, aluminum nitride or tin oxynitride. The material may be a mixture of a plurality of different types, such as a mixture of at least two types of these materials. The film (c) is preferably a film made of titanium oxide or zirconium oxide among these materials.

Further, the film thickness of the film (c) depends on the materials of films constituting the antireflection film or on the order of these films, and the thickness is usually from 1 to 80 nm considering antireflection performance or convenience in production (this is described later in more detail in Examples). Even in such a range, the layer stacks is within the scope of the present invention so long as it exhibits the effect of the present invention.

From now, the present invention is described with specific examples. Here, in the following examples (embodiments [1] to [4]), a glass substrate is designated as G and a film (a) made of high refractive index material is designated as "a", a film (b) made of low refractive index is designated as "b", and another film (film (c)) is designated as "c", and lamination order from glass plate is represented by suffix.
[1] G/a₁/b₂
[2] G/a₁/c₂/a₃/b₄
[3] G/a₁/c₂/b₃
[4] G/c₁/a₂/b₃

The film (c) may be disposed between the film (a) and the film (b) as in the embodiment [3], or it may be disposed between a glass sheet and the film (a) as in the embodiment [4]. Further, when the film (c) is employed, two films (a) may be formed and the film (c) may be provided between a film (a) and another film (a) as in the embodiment [2].

The number of films (a) in the antireflection film may be one or a plurality. In a case of plurality, the number of films (a) is two layers. The number of films (b) is preferably one, and the number of the films (c) is preferably one.

Here, in a case where at least two same layers are provided as in the embodiment [2] (two films (a) are provided in the case of embodiment [2]), these films (a₁ and a₃) may be the same or different in the thickness or the material.

In the antireflection film of the present invention, the total number of films constituting at least two layers, is preferably from 2 to 4, particularly preferably 2 or 3. In the present invention, the film (a) and the film (c) are thin films, and thus, they are easily formed. Accordingly, even in a layer stack in which the total number of films constituting the antireflection film is three layers or four layers, such a stack provides an antireflection film excellent in productivity, which can be produced at low cost.

From now, the embodiments [1] to [4] are specifically described using a film (a) in which the atomic ratio (Al/Co) between Al and Co is 1.6 as an example. When the atomic ratio (Al/Co) between Al and Co is another value, the thickness of the film may change according to the atomic ratio.

The embodiment [1] may be the following embodiment [1-1] in which on a glass substrate, a film (a₁) made of a Co-Al oxide and a film (b₂) made of SiO₂ are provided in this order.

### [1-1] G/Co-Al oxide (a₁)/SiO₂(b₂)

In the embodiment [1-1], the film thickness of the film (a₁) is from 5 to 50 nm, preferably from 10 to 40 nm, more preferably from 13 to 30 nm.

Further, the film thickness of the film (b₂) is from 105 to 170 nm, preferably from 115 to 150 nm, more preferably from 120 to 145 nm.

Further, the most suitable embodiment in the embodiment [1-1] is that the film thickness of the film (a₁) is from 13 to 30 nm and the film thickness of the film (b₂) is from 120 to 145 nm.

As the embodiment [2], the following embodiment [2-1] is preferred, in which on the glass sheet, the film (a₁) made of a Co-Al oxide, a film (c₂) made of TiO₂, another film (a₃) made of a Co-Al oxide and a film (b₄) made of SiO₂ are formed in this order to form four films in total, and the film thicknesses of these films are as follows.

### [2-1] G/Co-Al oxide (a₁)/TiO₂(c₂)/Co-Al oxide (a₃)/SiO₂(b₄)

In the embodiment [2-1], the film thickness of the film (a₁) is from 2 to 30 nm, preferably from 2 to 12 nm.

Further, the film thickness of the film (c₂) is from 2 to 22 nm, preferably from 2 to 12 nm.

Further, the film thickness of the film (a₃) is preferably from 2 to 30 nm, more preferably from 2 to 12 nm.

Further, the film thickness of the film (b₄) is preferably from 107 to 170 nm, more preferably from 130 to 155 nm.

Further, the most suitable embodiment in the embodiment [2-1] is that the film thickness of the film (a₁) is from 2 to 12 nm, the film thickness of the film (c₂) is from 2 to 12 nm, the film thickness of the film (a₃) is from 2 to 12 nm and the film thickness of the film (b₄) is from 130 to 155 nm.

As the embodiment [2], the following embodiment [2-2] is also preferred, in which on the glass sheet, the film (a₁) made of a Co-Al oxide, a film (c₂) made of ZrO₂, another film (a₃) made of a Co-Al oxide and a film (b₄) made of SiO₂ are formed in this order to form four films in total, and the film thicknesses of these films are as follows.

### [2-2] G/Co-Al oxide (a₁)/ZrO₂(c₂)/Co-Al oxide (a₃)/SiO₂(b₄)

In the embodiment [2-2], the film thickness of the film (a₁) is from 2 to 30 nm, preferably from 2 to 12 nm.

Further, the film thickness of the film (c₂) is from 2 to 50 nm, preferably from 2 to 37 nm.

Further, the film thickness of the film (a₃) is from 2 to 30 nm, more preferably from 2 to 12 nm.

Further, the film thickness of the film (b₄) is preferably from 87 to 170 nm, more preferably from 115 to 155 nm.

Further, the most suitable embodiment in the embodiment [2-2] is that the film thickness of the film (a₁) is from 2 to 12 nm, the film thickness of the film (c₂) is from 2 to 37 nm, the film thickness of the film (a₃) is from 2 to 12 nm and the film thickness of the film (b₄) is from 115 to 155 nm.

As the embodiment [3], the following embodiment [3-1] is preferred, in which on the glass sheet, the film (a₁) made of a Co-Al oxide, a film (c₂) made of TiO₂ and a film (b₃) made of SiO₂ are formed in this order to form three films in total, and the film thicknesses of these films are as follows.

### [3-1] G/Co-Al (a₁)/TiO₂(c₂)/SiO₂(b₃)

In the embodiment [3-1], the film thickness of the film (a₁) is from 2 to 30 nm, preferably from 7 to 17 nm.

Further, the film thickness of the film (c₂) is from 2 to 25 nm, preferably from 2 to 15 nm.

Further, the film thickness of the film (b₃) is from 107 to 170 nm, more preferably from 122 to 155 nm.

Further, the most suitable embodiment in the embodiment [3-1] is that the film thickness of the film (a₁) is from 7 to 17 nm, the film thickness of the film (c₂) is from 2 to 15 nm and the film thickness of the film (b₃) is from 122 to 155 nm.

As the embodiment [3], the following embodiment [3-2] is also preferred, in which on the glass sheet, the film (a₁) made of a Co-Al oxide, a film (c₂) made of ZrO₂, and a film (b₃) made of SiO₂ are formed in this order to form three films in total, and the film thicknesses of these films are as follows.

### [3-2] G/Co-Al oxide (a₁)/ZrO₂(c₂)/SiO₂(b₃)

In the embodiment [3-2], the film thickness of the film (a₁) is from 2 to 32 nm, preferably from 4 to 17 nm.

Further, the film thickness of the film (c₂) is from 2 to 50 nm, preferably from 5 to 50 nm.

Further, the film thickness of the film (b₃) is from 85 to 170 nm, more preferably from 85 to 155 nm.

Further, the most suitable embodiment in the embodiment [3-2] is that the film thickness of the film (a₁) is from 4 to 17 nm, the film thickness of the film (c₂) is from 5 to 50 nm and the film thickness of the film (b₃) is from 85 to 155 nm.

As the embodiment [4], the following embodiment [4-1] is preferred, in which on the glass sheet, a film (c₁) made of TiO₂, a film (a₂) made of a Co-Al oxide and a film (b₃) made of SiO₂ are formed in this order to form three films in total, and the film thicknesses of these films are as follows.

### [4-1] G/TiO₂(c₁)/Co-Al oxide (a₂)/SiO₂(b₃)

In the embodiment [4-1], the film thickness of the film (c₁) is from 2 to 17 nm, preferably from 5 to 10 nm.

Further, the film thickness of the film (a₂) is preferably from 2 to 32 nm, more preferably 9 to 15 nm.

Further, the film thickness of the film (b₃) is preferably from 107 to 170 nm, more preferably from 130 to 155 nm.

Further, the most suitable embodiment in the embodiment [4-1] is that the film thickness of the film (c₁) is from 5 to 10 nm, the film thickness of the film (a₂) is from 9 to 15 nm and the film thickness of the film (b₃) is from 130 to 155 nm.

As the embodiment [4], the following embodiment [4-2] is also preferred, in which on the glass sheet, a film (c₁) made of ZrO₂, a film (a₂) made of a Co-Al oxide and a film (b₃) made of SiO₂ are formed in this order to form three films in total, and the film thicknesses of these films are as follows.

### [4-2] G/ZrO₂(c₁)/Co-Al oxide (a₂)/SiO₂(b₃)

In the embodiment [4-2], the film thickness of the film (c₁) is from 2 to 50 nm, preferably from 5 to 50 nm, more preferably from 5 to 30 nm.

Further, the film thickness of the film (a₂) is from 2 to 32 nm, preferably from 7 to 22 nm, more preferably from 7 to 17 nm.

Further, the film thickness of the film (b₃) is from 85 to 170 nm, preferably from 107 to 158 nm.

Further, the most suitable embodiment in the embodiment [4-2] is that the film thickness of the film (c₁) is from 5 to 30 nm, the film thickness of the film (a₂) is from 7 to 17 nm and the film thickness of the film (b₃) is from 107 to 158 nm.

Further, in the above embodiments [1] to [4], the glass sheet (G) is preferably a non-colored transparent soda lime silica glass or a green type colored transparent glass having a UV-cut function.

Further, the antireflection glass of the present invention has sufficient abrasion resistance and transmittance for electromagnetic waves, and its structure may be a simple structure that the film (a) and the film (b) are provided on the glass sheet, whereby the antireflection glass is excellent in productivity and is producible at low cost. Further, since the thickness of entire antireflection film can be thin, which reduces material cost and enables to produce the glass at low cost.

Further, in the antireflection glass of the present invention, since the film (a) and the film (b) are each made of a material whose form does not change even if the film is subjected to heat treatment (in other words, the properties of the film after the heat treatment is not different from those before the heat treatment), the films are sufficiently durable against heat treatment at a time of production (at times of bending process or tempering process) and post-completion process is applicable. For example, in a production process of a front glass for automobiles, a flat glass on which a film is formed is subjected to a bending treatment at a high temperature of about from 560 to 700°C, and the glass sheet with antireflection film of the present invention is durable against such a process. Namely, even if a bending process is applied at a high temperature, there occurs no such problems as forming a crack on the film or change of film properties preventing the effect of the present invention. Accordingly, the glass sheet with antireflection film of the present invention is suitably employed as a glass to be used in a car-interior side of a front glass for automobiles. Further, even if the glass sheet with antireflection film of the present invention is subjected to a heat treatment at a time of tempering process at a high temperature of about from 560 to 700°C, there occurs no such problem as forming of cracks on the film or change of the film properties preventing the effects of the present invention. Accordingly, the glass sheet can be suitably employed for a tempered window glass, such as a sliding window glass for automobiles.

Further, the antireflection film of the present invention shows sufficient antireflection performance also in a case where the film is not subjected to a high temperature heat treatment for bending process or tempering process. Namely, a glass sheet with antireflection film obtainable by bending a glass sheet in a predetermined shape and tempering the glass sheet followed by forming the antireflection film of the present invention on a surface of the glass sheet, also shows the above-described visible light transmittance (Tᵥ) and visible light reflectivity (Rᵥ), whereby the glass sheet with antireflection film is effective for preventing reflection, and is excellent also in abrasion resistance and transmittance for electromagnetic waves.

The antireflection glass of the present invention is preferably employed for a laminated glass. Such a laminated glass is also within the scope of the present invention. Such a laminated glass is specifically referred to as "laminated glass of the present invention".

Namely, the laminated glass of the present invention is a laminated glass for windows comprising a first glass sheet, a second glass sheet provided with an antireflection film and an interlayer provided between the first glass sheet and the second glass sheet, wherein the second glass sheet is to be disposed in an indoor side, and wherein the second glass sheet provided with the antireflection film is the glass sheet with antireflection film of the present invention. In the laminated glass of the present invention, the outermost surface of the antireflected film is an indoor side surface.

Such a laminated glass of the present invention is preferably employed, for example, as a front glass for automobiles. When the laminated glass of the present invention is used for this application, it is possible to reduce projection of light from a dashboard and to improve visibility for a driver.

Here, each of the first glass sheet and the second glass sheet may be the same as a glass sheet usable for the above-mentioned glass sheet of the present invention in e.g. the material and the thickness. For example, the thickness of each of the first glass sheet and the second glass sheet may be from 1.5 to 3.0 mm. In this case, the first glass sheet and the second glass sheet may have the same thickness or they may have different thicknesses. When the laminated glass of the present invention is used for an automobile window, for example, the first glass sheet and the second glass may be each formed to have a thickness of 2.0 mm or they may be each formed to have a thickness of 2.1 mm. Further, when the laminated glass of the present invention is used for an automobile window, for example, the second glass sheet may be formed to have a thickness of less than 2 mm and the first glass sheet may be formed to have a thickness of more than 2 mm, whereby the total thickness of the laminated glass for a window can be small and the glass may be durable against an external force from a car-exterior side. The first glass sheet and the second glass sheet may be each a flat shape or a curved shape. Vehicles, especially automobile windows, are curved in many cases, and thus, the shapes of the first glass sheet and the second glass sheet are curved shapes in many cases.

Further, the interlayer may be any layer so long as it is usable for a laminated glass. For example, it may be polyvinyl butyral (PVB) or ethylene-vinyl acetate copolymer (EVA), and among these, PVB is preferred. The thickness of the interlayer is, for example, from 0.3 to 0.8 mm, and polyvinyl butyral of about 0.76 mm thick is preferred. Further, these interlayers may be interlayers in which an infrared shielding particles such as ITO (indium tin oxide) is dispersed.

The Co-Al oxide employed in the above embodiment more preferably has a Al/Co ratio of from 1 to 7. This is because with such a material construction, transmission color change rate and reflection color change rate for visible light of 0° incident become at most 0.01 and at most 0.05, respectively.

In the laminated glass for windows of the present invention, the reflectivity (Rᵥ) for visible light incident from the film surface at 60° incident is preferably at most 11%, particularly preferably at most 10%. Further, at 0° incident, the reflectivity is at most 8%, particularly preferably at most 6%. Further, the value of the visible light reflectivity (Rᵥ) is a value containing rear surface reflection in both of the cases of 60° incident and 0° incident.

Further, the visible light transmittance (Tᵥ) at 0° incident is preferably at least 70%, particularly preferably at least 75%. When the visible light transmittance (Tᵥ) is high, antireflection performance tends to decrease, and thus, the visible light transmittance is preferably at most about 85%.

A laminated glass obtainable by employing a glass sheet with antireflection film of any one of the above embodiments [1] to [4] and having the above construction, shows a reflectivity (including rear surface reflection) of 11% for visible light of 60° incident, and shows a visible light transmittance of at least 70% at 0° incident. Further, the reflectivity (including rear surface reflection) of the laminated glass for visible light of 0° incident, can be 8% or lower. Accordingly, the laminated glass of the present invention can be suitably employed particularly as a front glass for automobiles.

Further, in each of the above embodiments [1] to [4], particularly preferred embodiment is shown as "the most suitable embodiment". When a laminated glass having the above construction is produced by employing the antireflection glass of the most suitable embodiment, the laminated glass of the present invention shows a reflectivity (including rear surface reflection) of at most 10% for visible light of 60° incident, and a visible light transmittance of at least 75% at 0° incident.

Here, in the present invention, the reflectivity for visible light of 60° incident, the reflectivity for visible light of 0° incident and the visible light transmittance at 0° incident, are values measured by using an A light source and letting light incident from a film surface according to JIS-R 3106.

Next, a process for producing the glass sheet with antireflection film of the present invention and the laminated glass of the present invention, is described.

The method for forming the film (a), the film (b) and, as the case requires, the film (c), is not particularly limited, but, for example, a conventionally known method can be used. For example, a CVD method, a sputtering method or a thermal decomposition method may be used. Among these, these films are preferably formed by a sputtering method.

As the sputtering method, for example, a DC (direct current) sputtering method, an AC (alternate current) sputtering method, a high frequency sputtering method or a magnetron sputtering method may be mentioned. Among these, a DC magnetron sputtering method or an AC magnetron sputtering method is preferred. This is because these methods are excellent in process stability, whereby film-forming of large area is easy.

For example, in a case of forming a film (a) made of a Co-Al oxide on a glass sheet, for example, two targets that are a Co target and an Al target, are used and a gas containing oxygen atoms is used as a sputtering gas to apply a reactive sputtering, whereby the film (a) can be formed on the glass sheet. Here, by changing e.g. applied voltages to these two targets, the ratio between Co and Al contained in the film (a) formed on the glass substrate, can be changed. Further, in such a sputtering method, a target containing Co and Al may be used.

Further, a target containing Co, Al and O may also be used. Further, as the sputtering gas, a gas not containing oxygen may also be used. Further, in a case of forming a film (a) of Co-Zn-Al oxide, three targets may be used, or alternatively, a target containing these three elements may be used.

A method for forming a film (b) of silicon oxide on the surface of the film (a) formed on the surface of the glass sheet, is not particularly limited. For example, a method of applying a reactive sputtering method using silicon carbide (SiC) as a target and using a gas containing oxygen atoms as a sputtering gas, may be mentioned.

Further, in a case of forming a film (c) of titanium

oxide, a method of applying a reactive sputtering using TiOₓ (1<X<2) as a target and using a gas containing oxygen atoms as sputtering gas, may be mentioned. Further, in a case of forming a film (c) of zirconium oxide, for example, a method of applying a reactive sputtering method using zirconium as a target and using a gas containing oxygen atoms as a sputtering gas, may be mentioned.

In such a sputtering method, an inert gas such as carbon dioxide or argon may be used in combination with such a sputtering gas.

Sputtering conditions may be appropriately decided according to the type, the thickness, etc. of a film to be formed. Further, the total pressure of sputtering gas may be any pressure so long as the pressure enables stable glow discharge.

The laminated glass of the present invention may be produced, for example, by the following steps. First of all, the above-described glass sheet with antireflection film of the present invention, is bent. Subsequently, the glass sheet with antireflection film after the bending step, an interlayer, and another glass sheet (a glass sheet having no antireflection film) that was bent together with the glass sheet with antireflection film so that their curves are the same, are laminated so that the surface of the antireflection film is disposed in a car-interior side, and they are heated and press-bonded in a vacuum atmosphere.

### EXAMPLES

### [1] Evaluation of refractive index and extinction coefficient of film (a)

On a cathode in a vacuum chamber, an Al target and a Co target were disposed as sputtering targets. Further, the vacuum chamber was evacuated to 1.3×10⁻³ Pa or lower, and thereafter, a sputtering gas (a mixed gas of Ar and O₂) composed of argon gas and oxygen gas, was introduced into the vacuum chamber so that the pressure became 4.0x10⁻¹ Pa. Thereafter, a reactive sputtering was carried out by using a DC pulse power source and using an Al target and a Co target simultaneously, to form a film (a) made of an oxide containing Al and Co on a surface of a glass sheet (manufactured by Corning, product model: 1739) disposed in the vacuum chamber. The film (a) may also be referred to as CoAlₓO_{y} film in the following Examples.

Then, to a glass sheet with CoAlₓO_{y} film obtained, a heat treatment was applied in a small-sized belt furnace. The heat treatment conditions were such that the setting temperature was 650°C and the heat treatment time was 15 minutes. Then, the atomic ratio between Co atoms and Al atoms in the CoAlₓO_{y} film after the heat treatment, was measured by using XPS (x-ray photoelectron spectroscopy).

Table 1 shows the film-forming conditions (applied power to each target, volume ratio of Ar/O₂) and the measurement results of atomic ratio.

**TABLE 1**

| | Al power (W) | Co power (W) | Ar/O₂ gas flow rate (sccm) | Al/Co atomic ratio |
|---|---|---|---|---|
| Sample 1 | 700 | 50 | 21/9 | 20.2/1 |
| Sample 2 | 700 | 100 | 21/9 | 5.6/1 |
| Sample 3 | 700 | 200 | 19/11 | 2.4/1 |
| Sample 4 | 700 | 300 | 18/12 | 1.6/1 |
| Sample 5 | 700 | 400 | 18/12 | 1.1/1 |

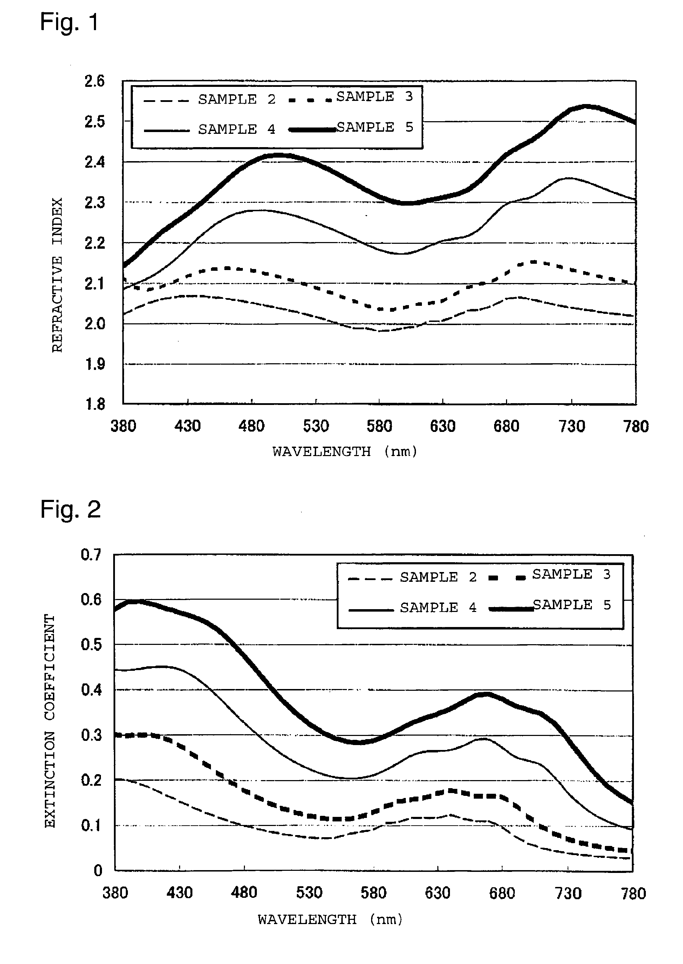

Further, the wavelength dispersions of refractive index and extinction coefficient of the CoAlₓO_{y} film after the heat treatment in a wavelength range of from 380 to 780 nm, were measured by using a spectroscopic ellipsometer. Figs. 1 and 2 show the measurement results. Sample 1 did not show the values of refractive index and extinction coefficient specified in the present invention since the ratio of aluminum atoms was too high.

### [2] Evaluation of refractive index and extinction coefficient of film (b)

On the cathode in the vacuum chamber, a Si target was disposed as a sputtering target. Then, the vacuum chamber was evacuated to 1.3×10⁻³ Pa or lower, and thereafter, a sputtering gas (Ar/O₂=18/12 (volume ratio)) composed of argon gas and oxygen gas, was introduced into the vacuum chamber so that the pressure became 4.0×10⁻¹ Pa. Thereafter, using a DC pulse power source, a reactive sputtering of Si target was carried out, to form a film (b) made of SiO₂ on a surface of a silicon wafer disposed in the vacuum chamber. This film (b) may be referred to as SiO₂ film hereinafter. Table 2 shows the film forming conditions.

**TABLE 2**

| Si Power | Ar/O₂ gas flow rate (sccm) |
|---|---|
| 500 W | 18/12 |

Then, to the silicon wafer with SiO₂ film obtained, a heat treatment was applied in a small-sized belt furnace. The heat treatment conditions were such that the setting temperature was 650°C and the heat treatment time was 15 minutes. Then, the wavelength dispersions of refractive index and extinction coefficient of the SiO₂ film after the heat treatment in a wavelength range of from 380 to 780 nm, were measured by using a spectroscopic ellipsometer.

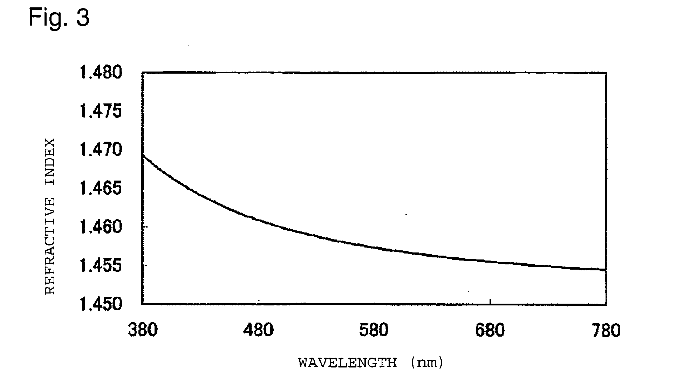

As a result, the extinction coefficient was zero in the range of from 380 to 780 nm. Fig. 3 shows the wavelength dispersion of refractive index of the SiO₂ film.

### [3] Preparation of glass sheet with antireflection film

A non-colored transparent soda lime silica glass (manufactured by Asahi Glass Company, Limited, the thickness: 2.3 mm, hereinafter referred to as "FL") was used as a glass sheet and an antireflection film having a layer stack of each of Examples 1 to 4 shown Table 3 was formed on the glass sheet, to obtain a glass sheet with antireflection film.

Here, in each of Examples 1 and 2, a CoAlₓO_{y} film was formed on a surface of FL under film-forming conditions equivalent to those of sample 4 of the above [1]. Further, on the top of the film, a SiO₂ film was formed under film-forming conditions equivalent to those of the above [2] .

Further, in each of Examples 3 and 4, a CoAlₓO_{y} film was formed on a surface of FL under film-forming conditions equivalent to those of sample 2 of the above [1] . Further, on the top of the film, a SiO₂ film was formed under film-forming conditions equivalent to those of the above [2].

Table 3 shows the film thickness of each of Examples 1 to 4. Further, Table 3 also shows atomic ratio between Co atoms and Al atoms in each of the CoAlₓO_{y} films measured by using XPS (X-ray photoelectron spectroscopy). Further, Table 4 shows visible light reflectivity and visible light transmittance of the glass sheet with antireflection film of each of Examples 1 to 4 obtained by simulation.

**TABLE 3**

| | Film construction | Al/Co atomic ratio |
|---|---|---|
| Example 1 | FL(2.3 mm)/CoAlₓO_{y}(16 nm)/SiO₂(153 nm) | 1.6:1 |
| Example 2 | FL(2.3 mm)/CoAlₓO_{y}(14 nm)/SiO₂(143 nm) | 1.6:1 |
| Example 3 | FL(2.3 mm)/CoAlₓO_{y}(20 nm)/SiO₂(125 nm) | 5.6:1 |
| Example 4 | FL(2.3 mm)/CoAlₓO_{y}(20 nm)/SiO₂(140 nm) | 5.6:1 |

**TABLE 4**

| | Visible light transmittance | Visible light reflectivity (60° incident) (%) | Visible light reflectivity (0° incident) (%) |
|---|---|---|---|
| Example 1 | 81.3 | 10.3 | 6.8 |
| Example 2 | 84.3 | 10.6 | 5.2 |
| Example 3 | 89.1 | 12.1 | 4.1 |
| Example 4 | 88.3 | 11.2 | 5.0 |

### [4] Preparation and evaluation of laminated glass

The glass sheet with antireflection film of each of Examples 1 to 4 obtained in the above [3], was subjected to a heat treatment at 600°C for 8 minutes, and then, gradually cooled in a room. Then, each of the glass sheets with antireflection film after the heat treatment, were laminated with an interlayer (0.76 mm) made of polyvinyl butyral and a green color transparent soda lime silica glass (manufactured by Asahi Glass Company, Limited, thickness: 2.3 mm, hereinafter referred to as "VLF") so that the surface of the antireflection film becomes an indoor side, to produce four types of laminated glasses employing the glass sheet with antireflection film of Examples 1 to 4 respectively. Then, with respect to each of the laminated glasses, transmittance and reflectivity for light in a wavelength region of from 380 to 780 nm were measured by using a spectrophotometer (U4100, manufactured by Hitachi, Ltd.), and the visible light transmittance Tᵥ (%) for light incident from the VFL glass sheet side, the visible light reflectivity Rᵥ (%) for light incident at an incident angle 60° or an incident angle 0° from the film (b) side, were obtained. Further, by using a 2-pin probe resistivity meter (Hiresta IP, manufactured by Mitsubishi Petrochemical), the sheet resistance was measured with respect to the antireflection film of each of the four laminated glasses.

As a result, as shown in Table 5, each laminated glass shows a resistivity of at least 1 GΩ/□. Further, each laminated glass shows a visible light transmittance of at least 70% at an incident angle 0°, and a visible light reflectivity of at most 11% at an incident angle of 60° and at most 8% at an incident angle of 0°.

**TABLE 5**

| | Visible light transmittance (0° incident) (%) | Visible light reflectivity (60° incident) (%) | Visible light reflectivity (0° incident) (%) | Resistivity (Ω/□) |
|---|---|---|---|---|
| Ex. 1 | 74.4 | 9.6 | 6.9 | 3.3×10⁹ |
| Ex. 2 | 76.7 | 9.4 | 5.1 | 7.2×10⁹ |
| Ex. 3 | 81.2 | 10.6 | 3.8 | 7.8×10¹² |
| Ex. 4 | 80.0 | 9.8 | 4.9 | 4.3×10¹² |

Further, a surface of the antireflection film of each of the glass sheet with antireflection film after the above heat treatment, was observed with an optical microscope, and it was confirmed that no crack was formed.

### [5] Evaluation of haze ratio

A glass sheet 5 with antireflection film was obtained in the same manner as Example 2 in [3] except that the film thicknesses of the film (a) and the film (b) were as follows:
FL (2.3 mm) /CoAlₓO_{y} (16 nm)/SiO₂ (140 nm) .
By using a haze meter, the haze value of the glass sheet 5 with antireflection film was measured at two points, and the haze values were 0.1% and 0.3% respectively.

The entire disclosure of Japanese Patent Application No. 2007-040928 filed on February 21, 2007 including specification, claims, drawings and summary is incorporated herein by reference in its entirety.

## Claims

1. A glass sheet with antireflection film, comprising a glass sheet and an antireflection film composed of at least two layers and provided on a surface of the glass sheet, wherein the antireflection film comprises a film
(a) made of a high refractive index material having a refractive index of from 1.8 to 2.6 and an extinction coefficient of from 0.01 to 0.65 in a wavelength region of from 380 to 780 nm, and a film (b) made of a low refractive index material having a refractive index of at most 1.56 in a wavelength region of from 380 to 780 nm, and wherein the film (b) is positioned at an outermost surface of the antireflection film and the antireflection film has a sheet resistance of at least 1 kΩ/□.

2. The glass sheet with antireflection film according to Claim 1, wherein the film (a) has a geometric film thickness of from 2 to 80 nm and the film (b) has a geometric film thickness of from 80 to 300 nm.

3. The glass sheet with antireflection film according to 1 or 2, wherein the main component of the high-refractive index material is a metal oxide (A) containing at least one selected from the group consisting of Co, Al, Si, Zn, Zr and V.

4. The glass sheet with antireflection film according to Claim 3, wherein the metal oxide (A) is at least one selected from the group consisting of a Co-Al oxide, a Co-Zn-Al oxide, a Co-Al-Si oxide, a Co-Zn-Si oxide, a Co-Si oxide and a Zr-Si-V oxide.

5. The glass sheet with antireflection film according to Claim 3 or 4, wherein the metal oxide (A) contains Co and Al, and the atomic ratio (Al/Co) between Al and Co is from 0.5 to 15.

6. The glass sheet with antireflection film according to any one of Claims 3 to 5, wherein the metal oxide (A) is CoAlₓO_{y} (0.5≦X≦15, 1.75≦Y≦24).

7. The glass sheet with antireflection film according to any one of Claims 1 to 6, wherein the low refractive index material is silicon dioxide.

8. A laminated glass for windows, comprising a first glass sheet, a second glass sheet provided with an antireflection film composed of at least two layers, and an interlayer provided between the first glass sheet and the second glass sheet, wherein the second glass sheet is to be positioned in an indoor side, and wherein the second glass sheet provided with the antireflection film, is a glass sheet with the antireflection film as defined in any one of Claims 1 to 7, and the outermost surface of the antireflection film is positioned in an indoor side.

9. A laminated glass for windows according to Claim 8, which has a visible light transmittance (Tᵥ) of at least 70% at an incident angle of 0°.

10. A laminated glass for windows according to Claim 8 or 9, which has a visible light reflectivity (Rᵥ) of at most 11% at an incident angle of 60° from a film surface of the antireflection film.

11. The laminated glass for windows according to any one of Claims 8 to 10, wherein the antireflection film has a visible light reflectivity (Rᵥ) of at most 8% at an incident angle of 0° from the film surface of the antireflection film.

12. A method for producing the glass sheet with antireflection film as defined in any one of Claims 1 to 7, wherein at least the film (a) is formed by sputtering.
